# EUROPÄISCHE PATENTSCHRIFT

(11) **EP 2 505 413 B1**
(45) Veröffentlichungstag und Bekanntmachung des Hinweises auf die Patenterteilung: **17.09.2014**
(21) Anmeldenummer: 12161668.4
(22) Anmeldetag: 28.03.2012
(51) Int. Cl.: B60K 13/04, B60K 15/04, F01N 3/24

(54) **Tankverschluss**
Tank closure
Bouchon de réservoir

(30) Priorität: 29.03.2011 DE 202011004562 U
(43) Veröffentlichungstag der Anmeldung: 03.10.2012
(73) Patentinhaber: Magna Steyr Fuel Systems GmbH, 41516 Grevenbroich (DE)
(72) Erfinder: Langemann, Martin, 40599 Düsseldorf (DE)
(74) Vertreter: Rausch, Gabriele

(56) Entgegenhaltungen:
- EP-A2- 2 106 950
- WO-A1-97/31835
- DE-A1-102007 043 991
- US-A- 2 058 214
- US-A1- 2009 145 903

## Beschreibung

Die vorliegende Erfindung betrifft einen Tankverschluss zum Verschliessen des Einfüllstutzens eines Fahrzeugtankes, insbesondere eines Fahrzeugzusatztanks zur Aufnahme einer wässrigen Harnstofflösung für die Nachbehandlung von Abgasen, mit einem kappenartig ausgebildeten Verschlusskörper, der auf den Einfüllstutzen schraubbar ist und eine Aufnahme für ein Dichtungselement aufweist, um einen Ringspalt zwischen dem Einfüllstutzen und dem Verschlusskörper abzudichten.

Um bei Dieselfahrzeugen die Stickoxidemissionen zu senken, findet in zunehmendem Masse eine Nachbehandlung der Abgase über die sogenannte selektive katalytische Reduktion (englisch: selective catalytic reduction, SCR) statt. Mit Hilfe dieser Technik können Nutzfahrzeuge die Euro-V-Norm und Pkw die sehr strengen amerikanischen Abgasnormen erfüllen. Bei der selektiven katalytischen Reduktion findet eine chemische Reaktion am SCR-Katalysator statt. Diese Reaktion ist selektiv, d. h. es werden bevorzugt Stickoxide (NO, No2) reduziert, während unerwünschte Nebenreaktionen wie beispielsweise die Oxidation von Schwefeldioxid zu Schwefeltrioxid weitgehend unterdrückt werden.

Für die Reduzierung von Stickoxiden wird Ammoniak (NH3) benötigt, das dem Abgas zugemischt wird. Die Produkte der Reaktion sind Wasser (H2O) und Stickstoff (N2). Das für die SCR-Reaktion benötigte Ammoniak wird bei Fahrzeugen nicht direkt, d. h. in reiner Form, eingesetzt, sondern in Form einer 32,5%igen wässrigen Harnstofflösung, die von der Industrie einheitlich mit AdBlue bezeichnet wird. Die Zusammensetzung ist in der DIN 70070 geregelt. Diese wässrige Lösung wird vor dem SCR-Katalysator in den Abgasstrang eingespritzt, wo aus der Harnstofflösung durch eine Hydrolysereaktion Ammoniak und CO2 entstehen. Das so erzeugte Ammoniak kann in dem SCR-Katalysator bei einer entsprechenden Temperatur mit den Stickoxiden im Abgas reagieren.

Der Verbrauch an Harnstoff-Wasserlösung beträgt abhängig von der Rohemission des Motors etwa 2 bis 8% des eingesetzten Dieselkraftstoffs. Für die Harnstofflösung ist deshalb in den Fahrzeugen ein entsprechender Zusatztank mit einem entsprechenden Volumen vorgesehen. Der Einfüllstutzen dieses Zusatztanks ist durch einen Tankverschluss verschlossen. Dieser besteht aus einem kappenartig ausgebildeten Verschlusskörper, der auf den Einfüllstutzen geschraubt ist. In dem Verschlusskörper ist eine Aufnahme für ein Dichtungselement vorgesehen, welches dazu dient, einen Ringspalt zwischen dem Einfüllstutzen und dem Verschlusskörper abzudichten, wenn der Verschlusskörper auf den Einfüllstutzen geschraubt ist.

Bei den bisher bekannten Tankverschlüssen ist der Verschlusskörper mit dem Innengewinde und der Aufnahme für das Dichtungselement als Spritzgussteil ausgebildet. Dieses ist jedoch schwer herzustellen, da die Innenkontur insbesondere im Bereich der Aufnahme für das Dichtungselement Hinterschneidungen aufweist, deren Herstellung geteilte Werkzeuge erfordert. Dies führt am fertigen Produkt zu Werkzeug trennkanten und Herstellungsungenauigkeiten, die zu Undichtigkeiten im Gebrauch führen können.
Aus der DE 10 2007 043991 istein Tankverschluss zum Verschliessen des Einfüllstutzens eines Fahrzeugtankes bekannt. zurAufnahme einer wässrigen Harnstofflösung für die Nachbehandlung von Abgasen, mit einem kappenartig ausgebildeten Verschlusskörper (1, 4), der auf den Einfüllstutzen schraubbar ist und eine Aufnahme für ein Dichtungselement (7) aufweist, um einen Ringspalt zwischen dem Einfüllstutzen und dem Verschlusskörper (1, 4) abzudichten, wobei ein Einsatzelement (5) in den Verschlusskörper (1, 4) durch dessen offene Unterseite her eingebracht und in dem Verschlusskörper (1, 4) fixiert ist, wobei das Einsatzelement (5) ein Innengewinde (8) trägt, über welches der Verschlusskörper(1, 4) an dem Einfüllstutzen fixierbar ist, und dass zwischen dem Einsatzelement(5) und der Oberseite des Verschlusskörpers(1, 4) die Aufnahme für das Dichtungselement(7) gebildet ist.Diese bauliche Ausführung weist keine hohe Dichtigkeit auf.

Aufgabe der vorliegenden Erfindung ist es daher, einen Tankverschluss der eingangs genannten Art zu schaffen, der einfach herzustellen ist und eine hohe Bauteilgenauigkeit und im Ergebnis eine hohe Dichtigkeit im Gebrauch gewährleistet.

Diese Aufgabe ist erfindungsgemäss dadurch gelöst, dass ein Einsatzelement in den Verschlusskörper durch dessen offene Unterseite her eingebracht und in dem Verschlusskörper fixiert ist, wobei das Einsatzelement ein Innengewinde trägt, über welches der Verschlusskörper an dem Einfüllstutzen fixierbar ist, und dass zwischen dem Einsatzelement und der Oberseite des Verschlusskörpers die Aufnahme für das Dichtungselement gebildet ist.

Der Erfindung liegt damit die Überlegung zugrunde, den Tankverschluss mehrteilig auszubilden. Konkret ist ein Einsatzelement vorgesehen, an welchem das Innengewinde zur Verbindung mit dem Einfüllstutzen ausgebildet ist. Dieses Einsatzelement ist in den Verschlusskörper durch dessen offene Unterseite her eingebracht und in dem Verschlusskörper fixiert, beispielsweise festgeclipst. Durch diese Ausgestaltung kann der Verschlusskörper selbst als einfache Kappe ausgebildet sein, die innenseitig eine im Wesentlichen glatte Kontur besitzt. Es ist allenfalls erforderlich, an der Innenkontur Rastausnehmungen oder Rastnasen vorzusehen, welche mit entsprechenden Gegenelementen des Einsatzelementes federnd in Eingriff kommen.

Dabei wird das Einsatzelement so weit in den Verschlusskörper eingebracht, dass sich zwischen der Oberseite des Einsatzelementes und der Verschlusskörperoberseite eine Aufnahme für das Dichtungselement definiert wird. Im Ergebnis braucht das Dichtungselement nur in den Verschlusskörper eingelegt zu werden, bevor das Einsatzelement eingebracht wird. Damit gestaltet sich das Einlegen des Dichtungselementes einfach.

Durch den mehrteiligen Aufbau sind keine mehrteiligen Werkzeuge bei der Spritzgussherstellung erforderlich, so dass auch keine Werkzeugkanten an dem fertigen Bauteil entstehen. Damit sind die Herstellungsgenauigkeit und damit die Einsatzzuverlässigkeit hoch.

Gemäss einer Ausführungsform der Erfindung ist vorgesehen, dass das Dichtungselement ringförmig und insbesondere als Lippendichtung ausgebildet ist. Beim Einsatz einer Lippendichtung weist diese mehrere nach oben in Richtung der Verschlusskörperoberseite abragende Lippen auf, die an der Verschlusskörperinnenwandung einerseits und an dem Einfüllstutzen andererseits in Anlage kommen und so eine optimale Abdichtung gewährleisten.

Grundsätzlich kann der Verschlusskörper an seiner Oberseite verschlossen sein. Gemäss einer bevorzugten Ausführungsform ist jedoch vorgesehen, dass der Verschlusskörper an seiner Oberseite eine Öffnung aufweist, die von der Verschlusskörperinnenseite her durch eine luftdurchlässige aber flüssigkeitsundurchlässige Membran verschlossen ist. Diese Membran kann an dem Verschlusskörper festgeschweisst sein, wenn diese aus Kunststoff besteht. Durch die Öffnung ist ein Druckausgleich zwischen dem Tankinneren und der Umgebung möglich.

Zweckmässigerweise ist dabei vorgesehen, dass in der Aufnahme des Verschlusskörpers zwischen dem Dichtungselement und der Membran ein Stützring vorgesehen ist, der die Membran abstützt.

Hinsichtlich weiterer vorteilhafter Ausgestaltungen der Erfindung wird auf die Unteransprüche sowie nachfolgende Beschreibung eines Ausführungsbeispiels unter Bezugnahme auf die beiliegende Zeichnung verwiesen. In der Zeichnung zeigt:

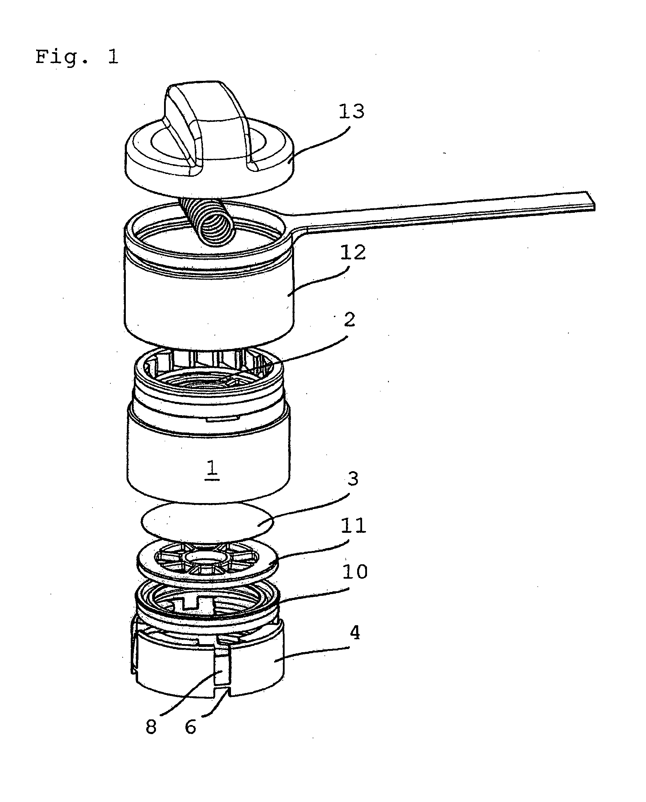

fig. 1 einen Tankverschluss gemäss der vorliegenden Erfindung in einer perspektivischen Explosionsansicht;

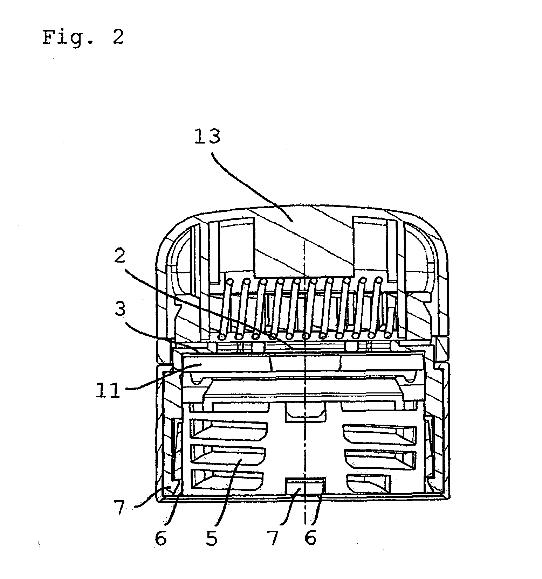

fig. 2 in Schnittansicht den Tankverschluss aus fig. 1 im zusammengebauten Zustand;
fig. 3 im Längsschnitt den Verschlusskörper mit daran montiertem Einsatzelement des Tankverschlusses;
fig. 4 in perspektivischer Darstellung den Verschlusskörper des Tankverschlusses;
fig. 5 den Verschlusskörper aus fig. 4 im Längsschnitt; und
fig. 6 das Einsatzelement des Tankverschlusses in perspektivischer Darstellung.

In der Zeichnung ist ein Tankverschluss gemäss der vorliegenden Erfindung dargestellt. Dieser dient dazu, den Einfüllstutzen eines Fahrzeugzusatztankes zu verschliessen, in welchem eine wässrige Harnstofflösung für die Nachbehandlung von Abgasen mitgeführt wird. Der Tankverschluss umfasst einen kappenartig ausgebildeten Verschlusskörper 1. Dieser besitzt eine zylindrische Grundform, und kann an seiner Oberseite verschlossen sein. In der hier dargestellten Ausführungsform weist der Verschlusskörper 1 jedoch an seiner Oberseite eine Öffnung 2 aufweist, die zur Be- und Entlüftung des Tanks dient. Die Öffnung 2 ist durch eine luftdurchlässige, jedoch flüssigkeitsundurchlässige Membran 3 von der Verschlusskörperinnenseite her verschlossen. Die Membran 3 ist in den Verschlusskörper 1 durch dessen offene Unterseite eingesetzt und mit dem Kunststoffmaterial des Verschlusskörpers 1 verschweisst.

Der Tankverschluss umfasst ferner ein Einsatzelement 4 , welches in den Verschlusskörper 1 durch dessen offene Unterseite her eingebracht und in dem Verschlusskörper 1 fixiert ist. Das Einsatzelement 4 trägt ein Innengewinde 5, über welches der Verschlusskörper 1 auf den Einfüllstutzen des Fahrzeugzusatztankes geschraubt werden kann.

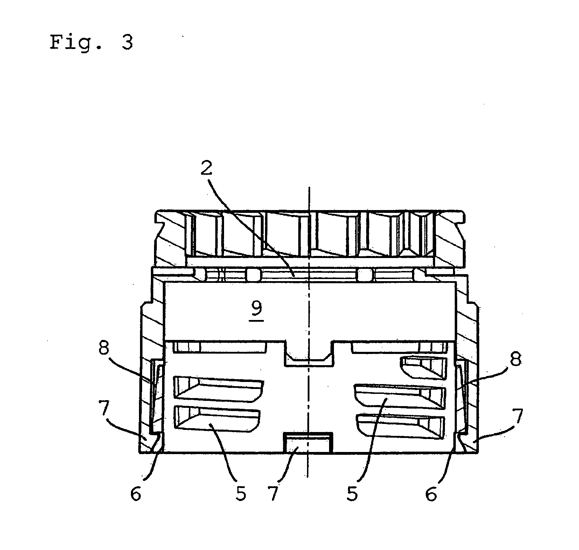

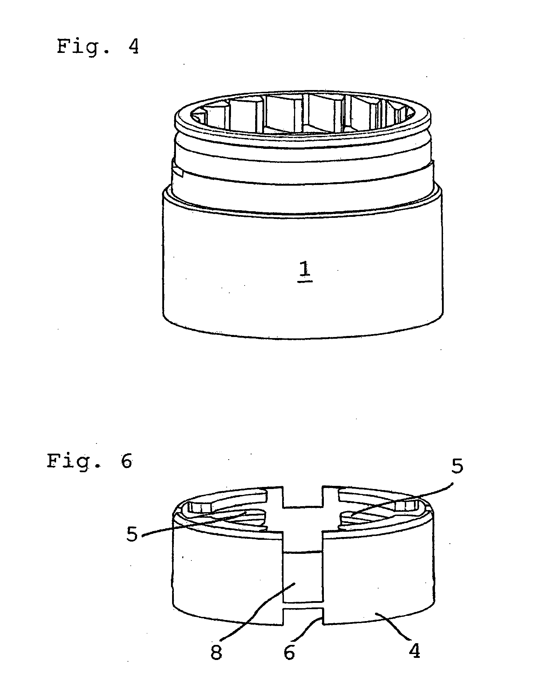

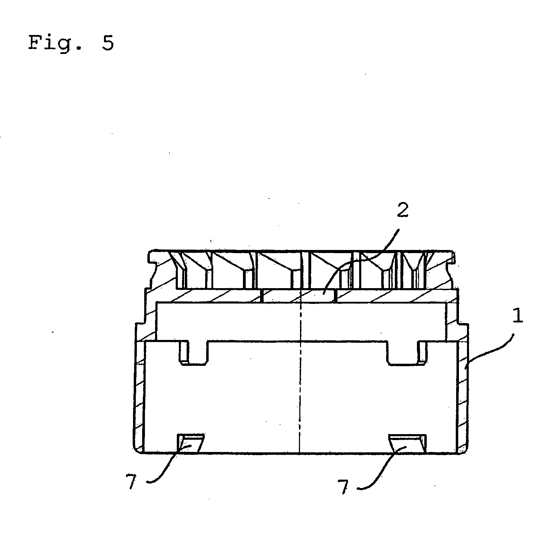

Wie insbesondere die fig. 3 bis fig. 6 gut erkennen lassen, ist das Einsatzelement 4 in dem Verschlusskörper 1 festgeclipst. Dazu sind am unteren Randbereich des Einsatzelementes 4 mit jeweils 90[deg.] Versatz zueinander insgesamt vier Rastausnehmungen 6 vorgesehen, in welche korrespondierende Rastnasen 7, welche an der Innenwandung des Verschlusskörpers 1 vorgesehen sind, einrasten können. Wie in der fig. 3 dargestellt ist, sind oberhalb der Rastausnehmungen 6 an der Wandung des Einsatzelementes 4 Schrägflächen 8 aus gebildet, mit denen die Rastnasen 7 des Verschlusskörpers 1 in Eingriff kommen und durch die sie elastisch nach aussen gedrückt werden, wenn das Einsatzelement 4 in den Verschlusskörper 1 geschoben wird.

Wie ebenfalls in der fig. 3 gut erkennbar ist, wird in dem Verschlusskörper 1 oberhalb des Einsatzelementes 4 eine Aufnahme 9 gebildet, wenn das Einsatzelement 4 in dem Verschlusskörper 1 fixiert ist. In diese Aufnahme 9 sind eine Lippendichtung 10 sowie ein mit Durchgangsöffnungen 11a versehener Stützring 11, welcher an der Unterseite der Membran 3 in Anlage kommt und diese abstützt, untergebracht.

Der Tankverschluss umfasst ferner eine Sichthülse 12 , welche über den Verschlusskörper 1 geschoben ist, und einen Tankdeckel 13 , welcher die offene Oberseite des Tankverschlusses 1 schliesst.

Bei der Montage wird zunächst die Membran 3 in den Verschlusskörper 1 eingesetzt und innenseitig an dem Verschlusskörper 1 festgeschweisst, um die Öffnung 2 zu verschliessen. Anschliessend werden der Stützring 11 sowie die Lippendichtung 10 in den Verschlusskörper 1 gelegt, bevor das Einsatzelement 4 in den Verschlusskörper 1 geschoben und darin festgeclipst wird. Die so montierte Einheit kann auf den Einfüllstutzen geschraubt werden, bevor die Sichthülse 12 und der Tankdeckel 13 montiert werden.

## Patentansprüche

1. Tankverschluss zum Verschliessen des Einfüllstutzens eines Fahrzeugtankes, zur Aufnahme einer wässrigen Harnstofflösung für die Nachbehandlung von Abgasen, mit einem kappenartig ausgebildeten Verschlusskörper (1), der auf den Einfüllstutzen schraubbar ist und eine Aufnahme (9) für ein Dichtungselement (10) aufweist, um einen Ringspalt zwischen dem Einfüllstutzen und dem Verschlusskörper ( 1) abzudichten, und wobei ein Einsatzelement (4) in den Verschlusskörper ( 1 ) durch dessen offene Unterseite her eingebracht und in dem Verschlusskörper ( 1 ) fixiert ist, wobei das Einsatzelement ( 4 ) ein Innengewinde (5) trägt, über welches der Verschlusskörper (1) an dem Einfüllstutzen fixierbar ist, und dass zwischen dem Einsatzelement ( 4 ) und der Oberseite des Verschlusskörpers (1) die Aufnahme ( 9 ) für das Dichtungselement ( 10) gebildet ist **dadurch gekennzeichnet, dass** der Verschlusskörper ( 1 ) an seiner Oberseite eine Öffnung ( 2 ) aufweist, die von der Verschlusskörperinnenseite her durch eine luftdurchlässige, aber flüssigkeitsundurchlässige Membran ( 3) verschlossen ist, und die Membran ( 3) an dem Verschlusskörper, welcher aus Kunststoff besteht, festgeschweisst ist.

2. Tankverschluss nach Anspruch 1, **dadurch gekennzeichnet, dass** das Einsatzelement ( 4) in dem Verschlusskörper ( 1) festgeclipst ist.

3. Tankverschluss nach Anspruch 1 oder 2, **dadurch gekennzeichnet, dass** das Dichtungselement ringförmig und insbesondere als Lippendichtung (10) ausgebildet ist.

4. Tankverschluss nach Anspruch 1, **dadurch gekennzeichnet, dass** in der Aufnahme ( 9) des Verschlusskörpers (1) zwischen dem Dichtungselement (10) und der Membran ( 3 ) ein Stützring ( 11 ) vorgesehen ist, der die Membran ( 3) abstützt.

## Claims

1. Tank closure assembly for closing the filler neck of a vehicle tank, for receiving an aqueous urea solution for the retreatment of exhaust gases, with a closing body (1) of cap-like design which can be screwed onto the filler neck and which has a receptacle (9) for a sealing element (10) in order to seal off an annular gap between the filler neck and the closing body (1), and an insert element (4) being introduced into the closing body (1) through the open underside of the latter and being fixed in the closing body (1), the insert element (4) carrying an internal thread (5), via which the closing body (1) can be fixed to the filler neck, and the receptacle (9) for the sealing element (10) being formed between the insert element (4) and the top side of the closing body (1), **characterized in that** the closing body (1) has on its top side an orifice (2) which is closed from the inside of the closing body by means of an air-permeable, but liquid-impermeable diaphragm (3), and the diaphragm (3) is firmly welded to the closing body which consists of plastic.

2. Tank closure assembly according to Claim 1, **characterized in that** the insert element (4) is snapped tight in the closing body (1).

3. Tank closure assembly according to Claim 1 or 2, **characterized in that** the sealing element is designed annularly and, in particular, as a lip seal (10).

4. Tank closure assembly according to Claim 1, **characterized in that** a supporting ring (11), which supports the diaphragm (3), is provided in the receptacle (9) of the closing body (1) between the sealing element (10) and the diaphragm (3).

## Revendications

1. Bouchon de réservoir pour fermer la tubulure de remplissage d'un réservoir de véhicule, pour recevoir une solution aqueuse d'urée pour le post-traitement de gaz d'échappement, comprenant un corps de bouchon (1) réalisé sous forme de capuchon, qui peut être vissé sur la tubulure de remplissage et qui présente un logement (9) pour un élément d'étanchéité (10) afin de fermer hermétiquement une fente annulaire entre la tubulure de remplissage et le corps de bouchon (1), un élément d'insert (4) étant introduit dans le corps de bouchon (1) depuis son côté inférieur ouvert et étant fixé dans le corps de bouchon (1), l'élément d'insert (4) portant un filetage interne (5) par le biais duquel le corps de bouchon (1) peut être fixé à la tubulure de remplissage, et le logement (9) pour l'élément d'étanchéité (10) étant formé entre l'élément d'insert (4) et le côté supérieur du corps de bouchon (1), **caractérisé en ce que** le corps de bouchon (1) présente, au niveau de son côté supérieur, une ouverture (2) qui est fermée depuis le côté intérieur du corps de bouchon par une membrane (3) perméable à l'air mais imperméable aux liquides, et la membrane (3) est soudée fixement au corps de bouchon qui se compose de plastique.

2. Bouchon de réservoir selon la revendication 1, **caractérisé en ce que** l'élément d'insert (4) est enclipsé fixement dans le corps de bouchon (1).

3. Bouchon de réservoir selon la revendication 1 ou 2, **caractérisé en ce que** l'élément d'étanchéité est réalisé sous forme annulaire et notamment sous forme de joint d'étanchéité à lèvre (10).

4. Bouchon de réservoir selon la revendication 1, **caractérisé en ce qu'**une bague de support (11) est prévue dans le logement (9) du corps de bouchon (1) entre l'élément d'étanchéité (10) et la membrane (3), laquelle supporte la membrane (3).
